# EUROPEAN PATENT APPLICATION

(11) **EP 3 511 830 A1**
(43) Date of publication of application: **17.07.2019**
(21) Application number: 18464001.9
(22) Date of filing: 15.01.2018
(51) Int. Cl.: G06F 9/54

(54) **METHOD FOR MONITORING DEVICES IN A NETWORK, COMPUTERIZED SYSTEM AND APPLICATION PROGRAM INTERFACE**

(71) Applicant: Siemens Aktiengesellschaft, 80333 München (DE); Siemens S.R.L., 062204 Bucuresti (RO)
(72) Inventor: ROSHCHIN, Mikhail, 81925 Munich (DE); BATSIUKOV, Kiryl, 81379 Munich (DE); MOGOREANU, Serghei, 85748 Garching bei München (DE); MURARASU, Alin, 81825 Munich (DE); MULLER, Martin, C., 81379 Munich (DE); POTT, Philipp, 91077 Neunkirchen am Brand (DE); BOTVINKIN, Pavel, 400123 Volgograd (RU); GRIGORAS, Cosmin-Dragos, Ploiesti, jud. Prahova (RO); SOROCIANU, Florin, 500233 Brasov, jud. Brasov (RO); VINTILA, Cristian Raul, 500152 Brasov, jud. Brasov (RO)
(74) Representative: Fierascu, Cosmina-Catrinel

(57) **Abstract**

Method for monitoring devices in a network, computerized system and application program interface

A Method for monitoring devices (2) generating event data items (EDI) comprises:
classifying events into meaningful and meaningless events according to a predetermined set of rules; and
discarding event data items (EDI) that are classified as meaningless events for generating a reduced set (RDS) of event data items (EDI); and/or
counting the event data items (EDI) per event description (DES) for calculating numbers of occurrences (NO), and identifying a top event description having the highest number of occurrence; and/or
identifying an interval (TI) where an elevated number of events (ENO) occurs; and/or
applying a sequence pattern mining process (SPM) to the set/reduced set of event data items (DS) as a function of the top or target event description and/or the identified time interval for detecting frequently occurring sequences of events; and
through an application program interface (6, 10), providing the reduced set of event data items (RDS), the numbers of occurrences (NO), the identified time intervals (TI) and/or the detected frequently occurring sequences of events in response to a request (REQ).

An application program interface with analytics functions on event data allows for efficient event data mining.

## Description

This disclosure relates to a method for monitoring devices in a network, such as an industrial automation network, a computerized system, and an application program interface.

In industrial automation, a large number of field devices that correspond to network-coupled devices through a communications network, such as the Internet, produce a vast amount of data that is sometimes called machine data. It is desirable to analyze such data, for example in order to improve the operation of a respective automation network. Devices such as field devices having sensors produce machine data that relate to the operational statuses of machines, for example. Other machine data can be log data, that form a list of events experienced by a respective device. Often machine data occur as time series in terms of data items that consist of a timestamp and a string. Items of a respective time series are usually attributed to an even, that can be described by a time(stamp) and an event description. Organizing, retrieving and processing machine or event date is involved when field devices of a computerized system are monitored.

In the past, so-called data mining methods were developed that organize and categorize data to discover patterns in large data sets in order to extract information and transform it into understandable structures for further use. In particular, in distributed cloud-based systems that run under particular operating systems, calculational resources, data storage and/or communication bandwidth can be limited or costly and efficient data handling is desired.

It is therefore an object of the present invention to provide an improved method for monitoring devices in a network using machine or event data. It is a further object to provide a computerized system and an application program interface that has data processing functionalities.

According to one aspect, a method for monitoring devices in a network is presented. Said devices generate event data items wherein an event data item comprises at least a time stamp and an event description. The method comprises the steps of:
receiving a set of event data items;
classifying events into meaningful and meaningless events according to a predetermined set of rules; and
discarding event data items that are classified as meaningless events for generating a reduced set of event data items; and/or
counting the event data items per event description in a predetermined time period for calculating numbers of occurrences and identifying a top event description having the highest number of occurrences; and/or
identifying at last one time interval where an elevated number of events according to the event data items occurs; and/or
applying a sequence pattern mining process to the set of event data items as a function of the top event description and/or the identified time interval for detecting frequently occurring sequences of events; and/or
applying a sequence pattern mining process to the reduced set of event data items as a function of a predetermined target event description and/or the identified time interval for detecting frequently occurring sequences of events; and
through an application program interface, providing the reduced set of event data items, the numbers of occurrences, the identified time intervals and/or the detected frequently occurring sequences of events in response to a request including at least one of the group of: a set of event data items, a predetermined set of rules, a predetermined time period, a target event description.

According to a second aspect, a computerized system comprising a plurality of devices, at least one processing device and an application program interface is presented. Said devices generate event data items wherein an event data item at least comprises a time stamp and an event description.

The processing device is implemented to:
receive a set of event data items;
   classify events into meaningful and meaningless events according to a predetermined set of rules; and
discard event data items that are classified as meaningless events for generating a reduced set of event data items; and/or
count the event data items per event description in a predetermined time period for calculating numbers of occurrences and identify a top event description having the highest number of occurrence; and/or
identify time intervals where an elevated number of events according to the event data items occurs; and/or apply a sequence pattern mining process to the set of event data items as a function of the top event description and/or the identified time interval for detecting frequently occurring sequences of events; and/or
apply a sequence pattern mining process to the reduced set of event data items as a function of a predetermined target event description and/or the identified time interval for detecting frequently occurring sequences of events.

The application program interface is implemented to provide the reduced set of event data items, the number of occurrences, the identified time intervals and/or the detected frequently occurring sequences of events in response to a request including at least one of the group of a set of event data items, a predetermined set of rules, a predetermined time period, a target event description.

According to a third aspect of this disclosure, an application program interface is presented. The application program interface can be used in a computerized system comprising a plurality of devices in a network wherein said devices generate event data items, an event data item at least comprising a time stamp and an event description.

The application program interface is implemented to instruct a processing device to:
receive a set of event data items;
classify events into meaningful and meaningless events according to a predetermined set of rules; and
discard event data items that are classified into meaningless events for generating a reduced set of event data items; and/or
count the event data items per event description in a predetermined time period for calculating numbers of occurrences and identify a top event description having the highest number of occurrence; and/or
identify time intervals where an elevated number of events according to the event data items occurs; and/or
apply a sequence pattern mining process to the set of event data items as a function of the top event description and/or the identified time interval for detecting frequently occurring sequences of events; and/or
apply a sequence pattern mining process to the reduced set of event data items as a function of a predetermined target event description and/or the identified time interval for detecting frequently occurring sequences of events.

The application program interface is further implemented to provide the reduced set of event data items, the number of occurrences, the identified time intervals and/or the detected frequently occurring sequences of events in response to a request including at least one of the group of a set of event data items, a predetermined set of rules, a predetermined time period, a target event description.

According to the method, system and the application program interface (API), event data items forming a set of event data items can be efficiently pre-processed, pre-analyzed or prepared for further analysis by the entity requesting data from the API.

The method, computerized system and API generally provide three functions: First, of reducing the number of event data items in a set, thereby forming a reduced set of event data items by performing a filtering process. Second, a statistics function for calculating numbers of occurrences or distributions of events are given. And third a sequence pattern mining (SPM) functionality is made available through the API. Hence, preprocessed event data based on event data items transmitted from devices in a network can be obtained.

It is understood that the three functionalities can be implemented and requested separately, but also in a combined fashion. For example, in a first process section, the event data items are classified and partially discarded to obtain a reduced set of event data items.

Within the reduced set of event data items, a second process section can perform statistical analysis in terms of counting and calculating numbers of occurrences or distributions of events, for example leading to top events that have an elevated occurrence. Such top events can be used as target events in a third sequence pattern mining process section.

Alternatively, the process sections can be executed and performed independently. For example, a process section can be implemented as a software service in a distributed automation system running under a dedicated operating system.

The event data in terms of event data items can be machine data, such as sensor data or log files. Generally, event data items have a predetermined format in terms of a time stamp and an event description in text form.

In embodiments, the computerized system or the network of devices can be formed by registered devices in a distributed cloud environment running under an operating system. The devices and other entities within the network or computerized system then interact and exchange data according to the operating system. The operating system can be, in particular, an operating system intended for the Internet of Things (IoT) provided by Siemens AG under the name MindSphere.

In embodiments, said devices are field devices in an industrial automation network.

Further, the computerized system or the network can comprise a distributed memory device for storing the event data items. In terms of the method, the step of storing the event data items in a distributed memory within the network or computerized system can be contemplated.

In embodiments of the method, the computerized system or the application program interface, the following aspects are implemented:

In embodiments, classifying events and discarding event data items comprises identifying event data items referring to a same event and discarding event data items that are identified as referring to the same event. A same event can be identified through the same event description by text comparison. Discarding event data items referring to the same event can be understood as a rule for classifying event data items into meaningful or meaningless events.

In embodiments, a predetermined set of rules for classifying events into meaningful and meaningless events involves a black list or a white list of event descriptions.

In embodiments, a machine learning algorithm for identifying meaningful and meaningless events is implemented. In particular, a blacklist and/or a whitelist are generated through a machine learning process.

In embodiments, classifying events comprises assessing as to whether a combination of a time stamp and an event description in an event data item occurs on a black list or a white list of events.

In embodiments, the method may comprise the step of discarding an event data item, if the respective number of occurrence is below a predetermined threshold occurrence.

For example, events that according to the event data items occur more often are considered important events, other - rare events - do not need to be further analyzed.

In embodiments, the method further comprises:
generating a distribution of events in the predetermined time period; and
through the application program interface, providing said distribution of events in response to a request.

The distribution of events gives density information so that in further data mining steps the distribution of events can be considered. For example, the identified time intervals where an elevated number of events occur can be further analyzed, while other time intervals where the event density is lower are not further considered.

In embodiments of the method, identifying time intervals and/or counting is only performed on the event data items of the reduced set of event data items. Hence, a statistical analysis in terms of the number of occurrences and/or distribution of events over the time period can be executed more efficiently, because less event data items need to be considered.

In embodiments, the application program interface is implemented according to a simple object access protocol (SOAP), an extensible mark-up language remote procedure call (XML-RC) or a representational state transfer (REST) standard.

For example, an API according to REST allows for interoperability between computer systems that are communicatively coupled through the Internet. In particular, the API can be used in cloud-based industrial networks.

In embodiments, applying a sequence pattern mining process comprises deploying a PrefixSpan method. PrefixSpan is a prefixed projected sequential pattern mining process presented in Pei J., Han J., Mortazavi-Asl J., Pinto H., Chen Q., Dayal U., Hsu M., "PrefixSpan: Mining Sequential Patterns Efficiently by Prefix-Projected Pattern Growth", 17th International Conference on Data Engineering (ICDE), April 2001, which is hereby incorporated by reference.

Further, according to embodiments applying a sequence pattern mining process includes setting a minimum support threshold through the request to the application program interface. Setting a minimum support for frequently appearing events through the SPM method can further reduce the computational effort in the event analysis.

The API involved in the method for monitoring and the computerized system can provide essential functionality for data analysis of event data and can assist a user and further data mining. The API is in particular suitable for use in web-based applications and devices implemented as network devices for the Internet.

A respective entity, e.g. the devices generating machine and/or event data or the processing device, may be implemented in hardware and/or in software. If said entity is implemented in hardware, it may be embodied as a device, e.g. as a computer or as a processor or as a part of a system, e.g. a computer system. One can also contemplate of programmable logic controllers (PLCs) being respective hardware devices. If said entity is implemented in software it may be embodied as a software service, computer program product, as a function, as a routine, as a program code or as an executable object.

According to a further aspect, the invention relates to a computer program product comprising program code for executing the above-described method for monitoring devices or the application program interface when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the computerized system of the present invention apply mutatis mutandis to the method and application program interface of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an embodiment of a computerized system including devices to be monitored.
- Fig. 2: shows an illustration for an event data item.
- Fig. 3: shows an illustration for a data set of event data items.
- Fig. 4: shows a functional illustration of an embodiment of an application program interface (API) for providing data.
- Fig. 5: shows a flow diagram of method steps involved in a dataset reduction function embodied by the API of Fig. 4.
- Fig. 6: illustrates a reduced data set of event data items.
- Fig. 7: shows a flow diagram of method steps involved in a dataset statistics function embodied by the API of Fig. 4.
- Fig. 8: shows a distribution of event occurrences generated by the statistics function embodied by the API of Fig. 4.
- Fig. 9: shows a flow diagram of method steps involved in a dataset sequence pattern mining function embodied by the API of Fig. 4.
- Fig. 10: illustrates steps involved in a sequence, pattern mining process.

In the Figures, like reference numerals designate like or functionally equivalent elements, unless otherwise indicated.

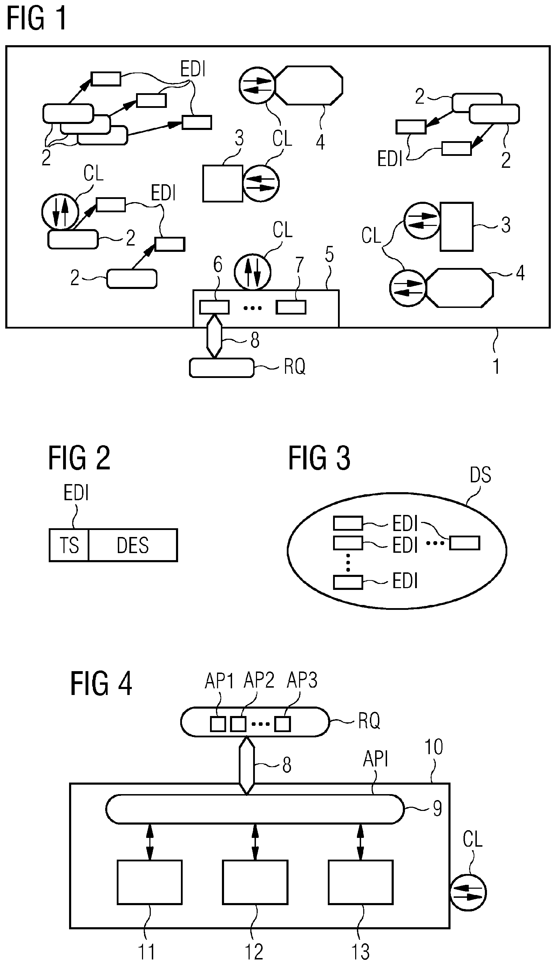

Fig. 1 shows an embodiment of a computerized system including devices to be monitored. The computerized system 1 includes a plurality of devices 2 that generate event data in terms of event data items EDI. An event data item EDI comprises a time stamp and a description of the respective event. This is illustrated in Fig. 2. An EDI may consist of a tuple of time information in terms of a time stamp and a string referring to the description of an event, e.g. EDIᵢ={timeᵢ, string}. An event can be, for example, sensor data, as for example a temperature in a machine measured by a field device at a specific time.

In Fig. 1, the devices 2 carry the same reference numeral though they are not necessarily same entities. The computerized system 1 can optionally comprise memory devices 3 that form distributed memories such as a cloud memory. Further, processing devices 4 can be included to carry out data processing.

In the embodiment shown in Fig. 1, the network devices 2, the memory devices 3 and the processing devices form a distributed industrial network that run under an operating system for the Internet of Things. The devices 2, 3, 4 may interact and exchange data according to the operating system. The devices are communicatively coupled to each other through the Internet which is indicated by the arrows CL forming communication links. The overall interaction and function of the system 1 is governed by the operating system, as for example the MindSphere operating system for a cloud-based automation system. The devices 2 generate a vast amount of event data items that, for example, can be stored in the distributed memory 3.

All event data items form a set of event data items or a data set which is illustrated in Fig. 3. It is often desirable to analyze the event data in terms of the event data items EDI in order to extract additional knowledge, useful patterns or hidden relationships between events that may improve the understanding of the system's behavior and its dynamics. Such data mining can further increase the effectiveness of a system and improve the operation of the automation system 1. For example, processing and analyzing the event data can improve the management of the devices, facilitate the maintenance of the system and enable system trouble shooting, optimize logistical routes and may allow for a better route-cause analysis.

In order to interact with the computerized system or automation system 1, an interface 5 is provided that can comprise user interfaces 7 and/or application program interfaces 6. An application program interface 6 allows for the communication between various software components. Hence, the application program interface (API) 6 allows communication with another application program or a controller when a request RQ is submitted. The interaction between the computerized system 1 through the API 6 is indicated by the arrow 8 in Fig. 1.

The API 6 facilitates monitoring the devices 2 that, for example, perform certain control or monitoring actions on machines and generate machine data in terms of event data items EDI.

In particular, an embodiment of an API 6 provides three functionalities. First, the API 6 allows to reduce the number of event data items EDI in a data set to be further analyzed or determined. Second, the API 6 allows for statistical analysis and thereby pre-processing of the event data in terms of the data set DS comprising the event data items EDI. Third, the API 6 may run a sequence pattern mining algorithm to discover unexpected or useful patterns in the event data.

A functional diagram of a further embodiment of an API 6 is illustrated in Fig. 4. Fig. 4 shows a functional illustration of an embodiment of an application program interface for providing data to requesting parties. The API 10 can be used as the API 6 in the computerized system of Fig. 1. The API 10 may be involved in embodiments of the method for monitoring the devices 2.

A request RQ from a party interested in event data submits the request RQ to the API 10 of the interface 5. The API 10 is again communicatively coupled through communication links CL to other parts of the system and may, for example, instruct processing devices 4 (see Fig. 1) to perform certain actions. For example, the API 10 may instruct the processing device 4 to retrieve a data set DS stored in one of the memory devices 3 for further analysis or pre-analysis. The request can carry several request parameters API, AP2, AP3 that specify the data to be exchanged via the API 10.

Block 9 refers to a central part of the API initiating the functions 11, 12 or 13 as a response to the request RQ. The actual data exchange with requesting parties is indicated through the arrow 8.

In the following, the functionalities of the API in terms of event analytics are explained separately. The functions can be implemented in terms of an overall method for operating the computerized system 1 in Fig. 1. Hence, it is understood that the method steps that can be carried out or initiated by the API or an operating system for the computerized system 1.

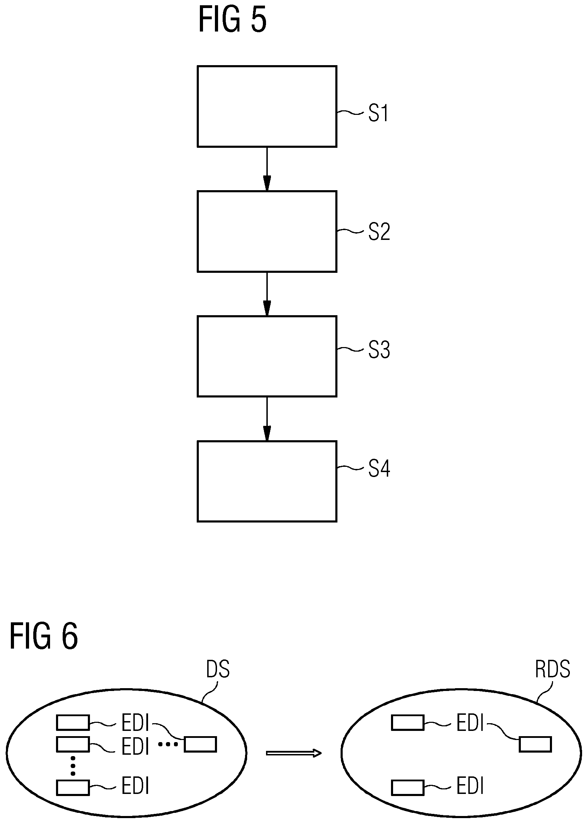

First, referring to the data set reduction function 11, a flow diagram of method steps involved is shown in Fig. 5. If a request requires to reduce the number of event data items to be retrieved or further analyzed, the API 10 generates a reduced data set RDS from the raw data available. In a first step S1, a request RQ is submitted to the API 10 For example, the request RQ can comprise a list of events or event descriptions that are to be kept or removed. For example, the request can comprise a black list or white list of event descriptions.

In a next step S2, the API 10 initiates the retrieval of the event data items EDI. This can be done by instructing a processing device 4 to read the event data items EDI that are stored in a memory 4.

Next, a respective processing device 4 classifies the event data items into meaningful and meaningless events according to a predetermined set of rules that can, for example, comprise a black list and a white list (step S3).

Fig. 6 shows how meaningless events or event data items EDI that refer to meaningless events are cancelled, thereby generating a reduced set RDS of event data items EDI. The black list or white list submitted with the request RQ in step S1 can be generated by a knowledge database and/or machine learning algorithms. For example, events that are known to be harmless and do not provide additional information can be written into a black list so that the further analysis of the reduced set RDS of event data items can be carried out more efficiently.

As a result, in step S4, the API 10 provides in response to the request RQ a reduced set of event data items.

As an example, events that have an implicit dependency to a time series can also be discarded as meaningless events. For example, if two successive values collected from a sensor as event data are related to another, those two event data items can relate to the same event. Hence, in embodiments for generating the reduced set RDS of event data items EDI the step of aggregating duplicate data is included. For example, event data items EDI that have the same time stamp TS and the same description DES are aggregated so that only one event data item remains. Therefore, the amount of event data items can be reduced, although no vital information is lost.

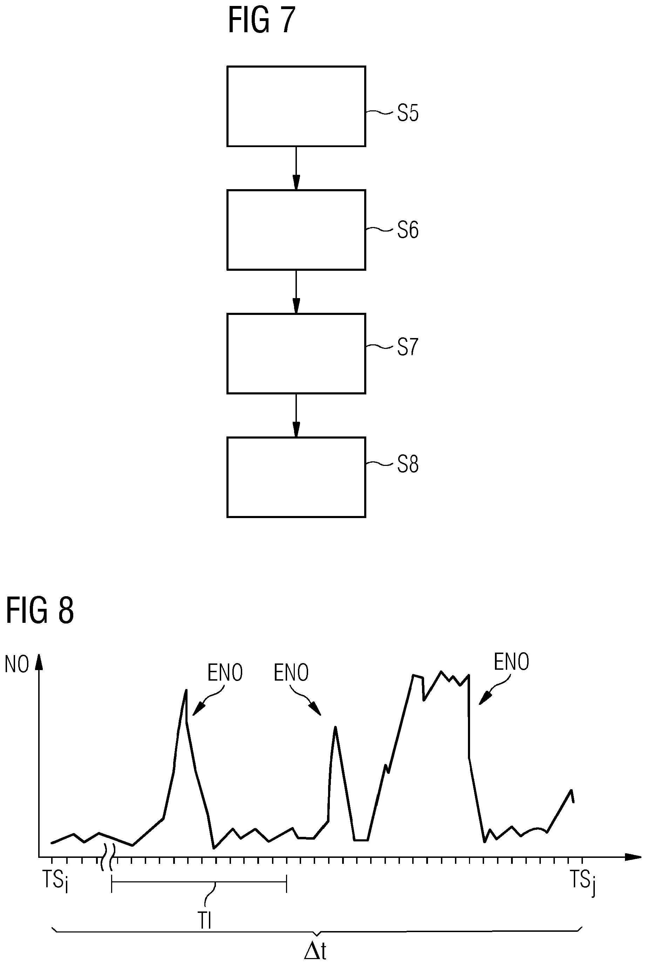

Next, a flow diagram of method steps involved in a data set statistics function 12 of the API 10 is explained with respect to Fig. 7. The API 10, upon request RQ, provides a statistical analysis in order to inform the user about most frequently occurring events and the distribution of the number of events over a predetermined time period that can be set by the request RQ.

In a first step S5, the request RQ is submitted to the API 10 wherein the request specifies that the statistics function 12 is desired. Next, the API 10 instructs a processing device 4 to retrieve the set DS of event data items EDI present. Alternatively, the reduced data set RDS can be used for the statistics analysis. Hence, in step S6 event data to be statistically processed is retrieved.

In a next step S7, top evens are identified. A top event is an event that occurs most frequently in the examined time period and is of high interest to the user. Hence, first, the event data items EDI referring to the same event description over a predetermined time period Δt is counted. Next', a sorting algorithm based on a number of occurrences NO can be executed, and a sorted list of events with the associated counts is presented.

Alternatively, or additionally, an event distribution is generated which is shown in Fig. 8. On the x-axis, time t is written, and on the y-axis, the number of events NO. The request RQ may specify a predetermined time period Δt over which the event distribution is to be generated. The time period Δt runs from time stamp TSᵢ to TSⱼ. Some time intervals TI show an elevated number of events ELO. If the number of events for a specific time interval or time stamp TS is above a certain threshold, an elevated number of events ELO can be detected.

For example, it might be detected that time intervals with peaks of events occur periodically. Then, the entire data set spanning over the entire time period can be reduced to one or more time windows that include the time intervals with the recurrent events. Instead of further mining all events only events in certain time windows are examined. Hence, on can map the time period to a time window having less event data items.

In step S8, as a result or response to the request RQ, the API 10 returns the sorted list of events as a function of the occurrences NO over the time period Δt and/or the time intervals TI where an elevated number ENO of events occur. For example, the ordered or sorted list of events as a function of the occurrence can facilitate the further analysis. In particular, a sequence pattern mining process may use the top events (events with the highest occurrence) as target events. Further, by returning the time intervals where an elevated number in the distribution of events is detected allows a user to further analyze those time intervals and neglect others.

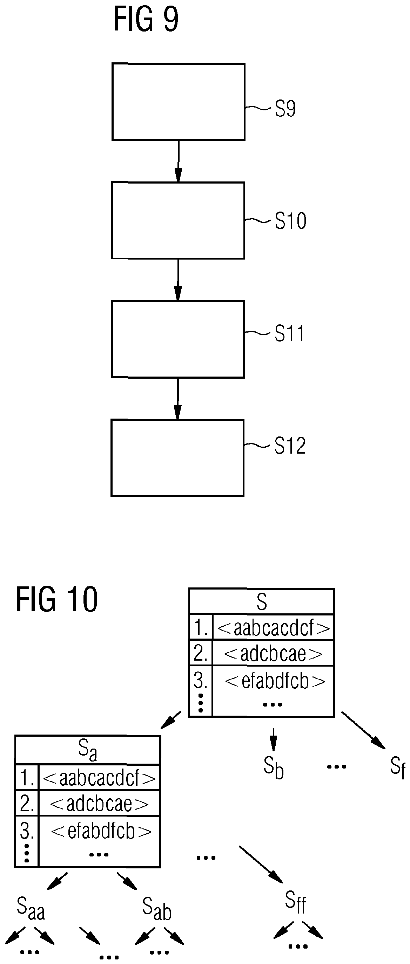

Finally, the API 10 implements a sequence pattern mining functionality 13. This is illustrated in terms of a flowchart in Fig. 9. First, a request RQ is obtained in step S9. The request can comprise a specification of the data set to be used, for example a reduced data set of the full data set, a target event that may be, for example, the top event identified in the statistics section 12 and/or a minimum support threshold for the sequence pattern mining algorithm.

In the next step S10, the API 10 initiates the retrieval of the respective event data items EDI. This can be done by instructing a processing device 4 to read the event data items EDI that are stored in a memory 4.

Sequence or sequential pattern mining is a useful method for data mining or analysis, in particular for time series. Even data items can be understood as time series and are therefore useful objects for SPM.

There are several SPM algorithms available that can be implemented by the API 10 to find frequently occurring event subsequences leading to a target event. The API is in particular implemented to carry out an SPM method according to the PrefixSpan algorithm that is disclosed in Pei J., Han J., Mortazavi-Asl J., Pinto H., Chen Q., Dayal U., Hsu M., "PrefixSpan: Mining Sequential Patterns Efficiently by Prefix-Projected Pattern Growth", 17th International Conference on Data Engineering (ICDE), April 2001, which is hereby incorporated by reference.

As an input through the RQ the event dataset DS is specified, a target event X is given and optionally a minimum support threshold is set.

Generally, the SPM method carried out in step S11 involves the following steps, which are illustrated in Fig. 10:
- Generate a sequence database S out of the set of event data items DS with respect to the target event X. Event types or event descriptions are identified as a, b, c...f. This means treating all of the events between two consecutive occurrences of the target event X as a separate sequence.
- Find all frequent subsequences in the database S.
- Find all subsequences of length 1 appearing in each sequence in S at least n times. They are denoted <a>, <b>, etc. in Fig. 10.
- Divide into the following subsets: all sequences having prefix <a>, all sequences having prefix <b>, etc. In Fig. 10 the subsets are called Sₐ, S_{b}, etc.
- Find all subsequences of length 2 appearing in each sequence in at least n times. They are denoted <aa>, <bb>, etc. This is done by searching in Sₐ, S_{b}, etc.
- S is again divided into parts, Sₐₐ, S_{ab}, etc.

The process is carried out in the similar fashion until one finds subsequences of length 1, appearing in each sequence in S at least n times.

The function 13 outputs in step S12 a set of frequently occurring event subsequences of length 1 leading to the target event X.

Further, optionally, the request can include a minimum support threshold for the SPM mining algorithm.

Hence, a disclosed method for monitoring devices in the network or a computerized system including an application program interface where the pre-processing functionalities, data reduction, statistics analysis and SPM can complement an operating system that is cloud-based and suitable for the Internet of Things.

Although the present invention has been described in accordance with preferred embodiments in connection with automation systems, it is obvious for the person skilled in the art that modifications are possible in all embodiments. For example, the method of monitoring devices can be also applied in a communications network where network devices or network nodes produce data items that have the format of event data items.

Although the present invention has been described in accordance with preferred embodiments, it is obvious for the person skilled in the art that modifications are possible in all embodiments.

## Claims

1. Method for monitoring devices (2) in a network, wherein said devices generate event data items (EDI), an event data item at least comprising a timestamp (TS) and an event description (DES),
receiving a set (DS) of event data items (EDI);
classifying events into meaningful and meaningless events according to a predetermined set of rules; and
discarding event data items (EDI) that are classified as meaningless events for generating a reduced set (RDS) of event data items (EDI); and/or
counting the event data items (EDI) per event description (DES) in a predetermined time period (Δt) for calculating numbers of occurrences (NO), and identifying a top event description having the highest number of occurrence; and/or
identifying at least one time interval (TI) where an elevated number of events (ENO) according to the event data items (EDI) occurs; and/or
applying a sequence pattern mining process (SPM) to the set of event data items (DS) as a function of the top event description and/or the identified time interval for detecting frequently occurring sequences of events; and/or
applying a sequence pattern mining process (SPM) to the reduced set (RDS) of event data items (EDI) as a function of a predetermined target event description and/or the identified time interval for detecting frequently occurring sequences of events; and
through an application program interface (6, 10), providing the reduced set of event data items (RDS), the numbers of occurrences (NO), the identified time intervals (TI) and/or the detected frequently occurring sequences of events in response to a request (REQ) including at least one of the group of: a set of event data items (DS), a predetermined set of rules, a predetermined time period (Δt), a target event description.

2. The method of claim 1,
wherein classifying events and discarding event data items (EDI) comprises:
identifying event data items (EDI) referring to a same event; and
discarding event data items (EDI) that are identified as referring to the same event.

3. The method of claim 1 or 2,
wherein classifying events comprises:
assessing as to whether a combination of a timestamp (TS) and an event description (DES) in an event data item (EDI) occurs on a blacklist or a whitelist of events.

4. The method of any one of claims 1 - 3,
further comprising:
discarding an event data item (EDI) if the respective number of occurrence (NO) is below a predetermined threshold occurrence.

5. The method of any one of claims 1 - 4,
further comprising:
generating an ordered list of event descriptions as a function of the number of occurrence (NO) of their event data items (EDI); and
through the application program interface (API), providing said ordered list in response to a request (REQ).

6. The method of any one of claims 1 - 5,
further comprising:
generating a distribution of events in the predetermined time period (Δt); and
through the application program interface (API), providing said distribution of events in response to a request (REQ).

7. The method of any one of claims 1 - 6,
wherein identifying time intervals (TI) and/or counting is only performed on the event data items (EDI) of the reduced set (RDS) of event data items (EDI).

8. The method of any one of claims 1 - 7,
wherein the application program interface (API) is implemented according to a Simple Object Access Protocol (SOAP), an Extensible Markup Language Remote Procedure Call (XML-RC) or a Representational State Transfer (REST) standard.

9. The method of any one of claims 1 - 8,
wherein applying a sequence pattern mining (SPM) process comprises deploying a PrefixSpan method.

10. The method of any one of claims 1 - 9,
wherein applying a sequence pattern mining process (SPM) includes setting a minimum support threshold through the request (REQ) to the application program interface (API).

11. A computerized system (1) comprising:
a plurality of devices (2) in a network, wherein said devices (2) generate event data items (EDI), an event data item (EDI) at least comprising a timestamp (TS) and an event description (DES);
a processing device (4) implemented to:
receive a set (DS) of event data items (EDI);
classify events into meaningful and meaningless events according to a predetermined set of rules; and
discard event data items (EDI) that are classified as meaningless events for generating a reduced set (RDS) of event data items (EDI); and/or
count the event data items (EDI) per event description (DES) in a predetermined time period (Δt) for calculating numbers of occurrences (NO), and identify a top event description having the highest number of occurrence; and/or
identify time intervals (TI) where an elevated number of events (ENO) according to the event data items (EDI) occurs; and/or
apply a sequence pattern mining (SPM) process to the set of event data items (DS) as a function of the top event description and/or the identified time interval for detecting frequently occurring sequences of events; and/or
apply a sequence pattern mining (SPM) process to the reduced set (RDS) of event data items (EDI) as a function of a predetermined target event description and/or the identified time interval for detecting
frequently occurring sequences of events; and
an application program interface (6, 10) providing the reduced set (RDS) of event data items (EDI), the numbers of occurrences (NO), the identified time intervals (TI) and/or the detected frequently occurring sequences of events in response to a request (REQ) including at least one of the group of: a set of event data items (DS), a predetermined set of rules, a predetermined time period (Δt), a target event description.

12. The computerized system of claim 11,
wherein the processing device (4) and the application program interface (6, 10) are implemented to execute a method according to any one of claims 1 - 9.

13. The computerized system of claim 11 or 12,
wherein said devices (2) are field devices in an industrial automation network.

14. The computerized system of any one of claims 11 - 13,
further comprising a distributed memory device (3) for storing the event data items (EDI).

15. An application program interface (6, 10) for a computerized system (1) comprising a plurality of devices (2) in a network, wherein said devices (2) generate event data items (EDI), an event data item (EDI) at least comprising a timestamp (TS) and an event description (DES); wherein:
the application program interface (6, 10) is implemented to instruct a processing device (4) to
receive a set (DS) of event data items (EDI); classify events into meaningful and meaningless events according to a predetermined set of rules; and discard event data items (EDI) that are classified as meaningless events for generating a reduced set (RDS) of event data items (EDI); and/or
count the event data items (EDI) per event description (DES) in a predetermined time period (Δt) for calculating numbers of occurrences (NO), and identify a top event description having the highest number of occurrence (NO); and/or
identify time intervals (TI) where an elevated number of events (ENO) according to the event data items (EDI) occurs; and/or
apply a sequence pattern mining (SPM) process to the set (DS) of event data items (EDI) as a function of the top event description and/or the identified time interval for detecting frequently occurring sequences of events; and/or
apply a sequence pattern mining (SPM) process to the reduced set (RDS) of event data items (EDI) as a function of a predetermined target event description and/or the identified time interval for detecting frequently occurring sequences of events; and
the application program interface (6, 10) is implemented to provide the reduced set (RDS) of event data items (EDI), the numbers of occurrences (NO), the identified time intervals (TI) and/or the detected frequently occurring sequences of events in response to a request (REQ) including at least one of the group of: a set of event data items (DS), a predetermined set of rules, a predetermined time period (Δt), a target event description.
